# EUROPÄISCHE PATENTANMELDUNG

(11) **EP 2 561 949 A1**
(43) Veröffentlichungstag der Anmeldung: **27.02.2013**
(21) Anmeldenummer: 11006913.5
(22) Anmeldetag: 24.08.2011
(51) Int. Cl.: B23K 20/12, B23K 37/053, B23K 37/06, F16L 37/12, B23K 9/035

(54) **Vorrichtung zum Zentrieren, Abstützen und zur Schweißbadsicherung beim Rührreibschweissverbinden von Stumpfstößen rotationssymmetrischer Hohlkörper**

(71) Anmelder: Wartmann Technologie AG, 4538 Oberbipp (CH)
(72) Erfinder: Schenk, Tobias, 5014 Gretzenbach (CH)
(74) Vertreter: Hannig, Wolf-Dieter

(57) **Zusammenfassung**

Die Erfindung betrifft eine Vorrichtung zum Zentrieren, Abstützen und zur Schweißbadsicherung beim Verbinden, insbesondere Rührreibschweißen oder Schmelzschweißen, von Stumpfstößen rotationsymmetrischer Hohlkörper.

Der Spannkörper ist als Schweißbadsicherung in Form einer Spann- und Abstützscheibe (10) ausgebildet, die in kreissegmentförmige Primär- und Sekundärbacken (14,16) mit jeweils daran radial in Richtung Hohlkörperachse angebrachten Steg- und Haltelementen (26) aufgeteilt ist, von denen jedes Steg- und Halteelement (26) der Primär- und Sekundärbacke (14,16) in einer Aussparung (27) eines Trägerelementes (28) geführt und einen Steuerbolzen aufweist, der jeweils in eine separate Steuerkulisse einer jeweils den Primärbacken (14) und Sekundärbacken (16) gesondert zugeordneten Primärsteuer- und Sekundärsteuerscheibe zum radialen Führen und Verstellen der Steuerbolzen in die jeweilige Steuerkulisse eingreift, wobei die Primärsteuerscheibe und Sekundärsteuerscheibe mit einer Steuerwelle verbunden ist, die zum Hin- und Herschwenken der Primärsteuerscheibe und der Sekundärsteuerscheine zwischen einem Spann- und Entspannzustand der Primär- und Sekundärbacken (14,16) mit einem Schwenkantrieb in Verbindung steht.

## Beschreibung

Die Erfindung betrifft eine Vorrichtung zum Zentrieren, Abstützen und zur Schweißbadsicherung beim Verbinden, insbesondere Rührreibschweißen oder Schmelzschweißen, von Stumpfstößen rotationsymmetrischer Hohlkörper, beispielsweise Rohre, Flansche o. dgl., mit einem sich an den Innendurchmesser des rotationssymmetrischen Bauteils formschlüssig anpassbaren Spannkörper.

### Stand der Technik

Es sind aus dem Stand der Technik eine ganze Reihe von Schweißbadsicherungen für das Stumpfstoßschweißen von rotationssymmetrischen Hohlkörpern wie beispielsweise Rohr-Rohr-, Flansch-Rohr-Flansch oder Flansch-Rohr-Anordnungen bekannt (DE 197 20 961 C1, DE 31 02 019 A1, DD 105 576 A1, DD 125 903 A1). Trotzdem ist das Stumpfstoßschweißen infolge der nur mit einem erheblichen Aufwand betreibbaren visuellen Kontrolle der Wurzel im Inneren der Hohlkörper problematisch geblieben und erfordert regelmäßig aufwändige Nacharbeiten.

Die DE 197 20 961 C1 beschreibt eine Lösung zur Wurzel-Schweißbadsicherung, insbesondere beim StumpfSchweißen zweier Rohre, bei dem die Schweißnaht im Inneren der Rohre zur Vermeidung des Durchfallens/Durchbrennens und zur Verhinderung einer unzulässig starken Wurzelüberhöhung zum Inneren des Rohres abgestützt wird. Die Abstützung erfolgt während des Schweißens lediglich im Bereich unterhalb des Schweißbades, wobei die Abstützung durch Reibung an der Rohrinnenwand zwischen Rohr und Schweißeinheit selbsttätig mitgeführt und nach Beendigung des Schweißvorganges von der Schweißnaht wegbewegt und aus dem Rohr ausgefahren wird.
Die Abstützung läuft bei dieser bekannten Lösung durch Reibschluss an der Innenseite mit der sich drehenden Rohr-Rohr-Anordnung simultan ab und ist somit einem hohen Verschleiß ausgesetzt, der im Laufe der Bearbeitung zur Unwucht führt, was wiederum fehlerhafte Wurzelausbildungen nach sich zieht. Eine stoßseitige Zentrierung der beiden Rohrenden ist mit dieser Abstützung nicht möglich, so dass vor dem Schweißen die beiden Rohrenden geheftet werden müssen.
Außerdem hat diese bekannte Lösung den Nachteil, dass größere Kräfte wie sie beispielsweise beim Rührreibschweißen durch das mit hoher Drehgeschwindigkeit umlaufende Werkzeug in die Rohrenden zwangsläufig eingebracht werden, nur mit erheblichen Qualitätseinbußen oder gar nicht aufgenommen werden können.

In der DE 31 02 019 C1 ist eine Gegenstützvorrichtung für das Schweißbad beim automatischen Stumpfschweißen beschrieben, die mittels zweier in Umfangsrichtung angeordneter Sätze von Radialkolben einer Innenverbindungseinrichtung fluchtend zusammengehalten sind, wobei die Gegenstützvorrichtung einen Satz von voneinander unabhängigen segmentartigen Kupfereinsätzen als Ausfütterung aufweist, die in Form eines Ringes angeordnet und jeweils fest mit einem zugeordneten darunter liegenden Satz von Einsatztragelementen verbunden sind, die ihrerseits jeweils an einem einer Anzahl in Umfangsrichtung angeordneter Radialkolben abgestützt sind.
Mit der Vielzahl der am Innenumfang verteilten Radialkolben baut diese bekannte Schweißbadsicherung verhältnismäßig aufwändig.
Eine andere bekannte Lösung (US 4 177 914 A) offenbart zum formschlüssigen Anpressen einen an den Innendurchmesser Rohrs ausgelegten Ring mit senkrecht gegen die Rohrinnenwandung drückbaren Gleitelementen, die mittels eines Antriebs gehoben oder gesenkt werden können.
Des Weiteren ist aus der DD 125 903 A1 eine Schweißbadsicherung für regelmäßig und unregelmäßig gekrümmte Schweißnähte, insbesondere Rohrrundnähte bekannt, bei der an einer auf den Rohrquerschnitt mittig angeordneten Scheibe ein oder mehrere Rollenhalter beweglich angebracht sind, die am anderen Ende frei drehbare Rollen halten, wobei die Scheibe durch einen Antrieb in Rotation versetzt wird.
All diesen bekannten Lösungen ist der Nachteil gemeinsam, dass die Schweißbadsicherung nur die Funktion des Absicherns gegen das Herausfallen des Schweißgutes aus der Schweißfuge sichert, jedoch nicht in der Lage ist, axiale Spannkräfte zum Übertragen von Drehbewegungen des einen Rohrteils über den Stoßbereich in den anderen Rohrteil einzuleiten.
Die Lösungen können weiterhin auch keine Zentrierung der beiden zu verbindenden Rohre sicherstellen, weil die Einspannorte für die Schweißbadsicherung jeweils voneinander unabhängig in den Rohrenden liegen und kein Ausrichten des einen Rohrendes nach der Innengeometrie des anderen Rohrendes stattfindet.

### Aufgabenstellung

Bei diesem Stand der Technik liegt der Erfindung die Aufgabe zugrunde, eine Schweißbadsicherung zu schaffen, mit der das Zentrieren von rotationssymmetrischen Hohlteilen aneinander, beispielsweise Rohr-Rohr-, Rohr-Flansch- oder Flansch-Rohr-Flansch-Anordnungen und zugleich die Übertragung von axiale Spannkräften über den Stoßbereich des einen Hohlkörpers in den anderen Hohlkörper bei gleichzeitiger Reduzierung der Nacharbeit unter Einsparung von Material und Gewährleistung wirtschaftlicher Vorteile möglich ist.

Diese Aufgabe wird durch eine Vorrichtung der eingangs genannten Art mit den Merkmalen des Anspruches 1 gelöst.

Vorteilhafte Ausgestaltungen der Vorrichtung sind den Unteransprüchen entnehmbar.

Die erfindungsgemäße Lösung geht von der Erkenntnis aus, den Spannkörper als Schweißbadsicherung in Form einer Spann- und Abstützscheibe auszubilden, die in kreissegmentförmige Primär- und Sekundärbacken mit jeweils daran radial in Richtung Hohlkörperachse angebrachten Steg- und Haltelementen aufgeteilt ist, von denen jedes Steg- und Halteelement der Primär- und Sekundärbacke in einer Aussparung eines Trägerelementes geführt und einen Steuerbolzen aufweist, der jeweils in eine separate Steuerkulisse einer jeweils den Primärbacken und Sekundärbacken gesondert zugeordneten Primärsteuer- und Sekundärsteuerscheibe zum radialen Führen und Verstellen der Steuerbolzen in die jeweilige Steuerkulisse eingreift, wobei die Primärsteuerscheibe und Sekundärsteuerscheine mit einer Steuerwelle verbunden ist, die zum Hin- und Herschwenken der Primärsteuerscheibe und der Sekundärsteuerscheine zwischen einem Spann- und Entspannzustand der Primär- und Sekundärbacken mit einem Schwenkantrieb in Verbindung steht.

In einer bevorzugten Ausgestaltung der erfindungsgemäßen Vorrichtung umfasst die Spann- und Abstützscheibe:
a) einen Primärbackenkörper aus mindestens drei Primarbacken, die unter Bildung von Lücken kreissegmentförmig am Umfang der Scheibe angeordnet sind und an dessen Steg- und Halteelement je ein Steuerbolzen senkrecht aufragend befestigt ist;
b) die Primärsteuerscheibe, in der für jede Primärbacke die Steuerkulisse zum Führen der Steuerbolzen der Primärbacken vorgesehen ist;
c) einen Sekundärbackenkörper aus mindestens drei kreissegmentförmigen Sekundärbacken (16), an dessen Steg- und Halteelemente je ein Steuerbolzen senkrecht aufragend befestigt ist, wobei die Sekundärbacken zueinander versetzt entlang des Umfangs so angeordnet sind, dass sie die Lücken zwischen jeweils zwei Primärbacken schließen können;
d) das Trägerelement radial angeordnete Aussparungen zum Verschieben der Stege- und Halteelemente radialer Richtung;
e) die Sekundärsteuerscheibe, in der für jede Sekundärbacke die Steuerkulisse zum Führen der Steuerbolzen der Sekundärbacken vorgesehen ist;
f) die Steuerwelle, die fest mit der Primärsteuerscheibe und der Sekundärsteuerscheibe verbunden ist und
g) einen pneumatischen oder hydraulischen oder elektrischen Schwenkantrieb, der die Steuerwelle bewegt, um die Steuerbolzen in ihren Steuerkulissen zu führen und die Primärbacken und Sekundärbacken radial zu spannen oder zu entspannen.

In weiterer bevorzugter Ausgestaltung der erfindungsgemäßen Vorrichtung greift beim Spannvorgang die Spann- und Abstützscheibe in das Innere des Stoßbereiches der zu verbindenden Hohlteile spannend ein, wobei in einem ersten Spannzustand etwa 65 bis 70% der Innenumfangs des Stoßbereiches mittels der durch Lücken voneinander beabstandeten Primärbacken und in einem zweiten Spannzustand der gesamte Innenumfang durch ein radiales Ausfahren der Sekundärbacken in die Lücken zwischen den Primärbacken in Richtung Innenwand im Stoßbereich beaufschlagt wird, so dass der Stirnbereich der Spann- und Abstützscheibe eine geschlossene Fläche für die Schweißbadsicherung, das Widerlager für die Druckkräfte beim Verbinden und zum Spannen gegen die Innenwand bildet, und dass zum Lösen der Spann- und Abstützscheibe die Sekundärbacken aus dem Bereich zwischen den Primärbacken radial entgegengesetzt zur Innenwand im Stoßbereich eingefahren werden.

In einer bevorzugten weiteren Ausgestaltung der erfindungsgemäßen Vorrichtung sind die Steuerkulissen in der Primärsteuerscheibe und der Sekundärsteuerkulisse radial so angeordnet, dass beim Spannen die Primärbacken und Sekundärbacken durch den Schwenkantrieb simultan angetrieben werden, jedoch beim Spannen die Sekundärbacken gegenüber den Primärbacken und beim Entspannen die Primärbacken gegenüber den Sekundärbacken in ihrer Verschiebebewegung jeweils durch die unterschiedliche Lage der Steuerkurven der Steuerkulissen nachfolgen.

Zweckmäßig ist auch, wenn die Primärbacken und Sekundärbacken jeweils an ihren einander zugewandten Ende eine Abschrägung aufweisen, die aufeinander nach Lage und Winkel abgestimmt sind, wobei die Abschrägung der Primärbacken der Antriebswelle zugewandt und die Abschrägung der Sekundärbacken der Antriebswelle abgewandt ist. Dies stellt sicher, dass die Stirnfläche der Spann- und Abstützfläche im Spannzustand geschlossen ist und sich vollkommen formschlüssig an die Innenwand des Stoßbereiches der beiden Hohlkörper anlegt.

Von besonderer Bedeutung für die Dreifachfunktion der Spann- und Abstützscheibe ist es, dass diese eine ausreichende Dickenabmessung im Stirnbereich besitzt und in beide Innenbereiche der zu verbindenden Hohlkörper soweit hineinreicht, dass der beim Rührreibschweißen bzw. Schmelzschweißen auftretende Erweichungsvorgang entlang der Stoßfuge abgestützt wird und zugleich die axialen Spannkräfte in Richtung Längsachse der Flansch-Rohr-Flansch-Anordnung übertragen werden können, ohne die erweichte Stoßfuge axial zu verformen, und andererseits ein Zentrieren nach der Innengeometrie der Hohlkörper ohne gesonderte Mess- und Einrichtvorgänge ermöglicht wird.
Der Stirnbereich der Spann- und Abstützscheibe muss vollkommen formschlüssig an der Innenwand beider Stoßenden von Rohr und Flansch anliegen. Dies wird dadurch erreicht, dass die Primärbacken und Sekundärbacken jeweils an ihren einander zugewandten Ende eine Abschrägung aufweisen, die aufeinander nach Lage und Winkel abgestimmt sind, wobei die Abschrägung der Primärbacken der Steuerwelle zugewandt und die Abschrägung der Sekundärbacken der Steuerwelle abgewandt ist.

Der Schwenkantrieb der erfindungsgemäßen kann variabel abgetrieben werden, so dass sowohl pneumatische, hydraulische oder elektrische Antriebe zum Einsatz kommen können, ohne die Erfindung zu verlassen.
Des Weiteren kann die erfindungsgemäße Vorrichtung auch mit Vorteil für Spann- und Einrichtvorgänge bei Spanbearbeitung eingesetzt werden.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.

Es zeigen

Fig. 1 eine Schnittdarstellung eines in den Stoßbereich zweier Hohlkörper eingesetzten spann- und Abstützscheibe,

Fig. 2 eine Darstellung der Spann- und Abstützscheibe in Draufsicht im geöffneten Zustand von der Primärseite aus,

Fig. 3 eine Darstellung der Spann- und Abstützscheibe in Draufsicht im geöffneten Zustand von der Sekundärseite aus,

Fig. 4 eine perspektivische Darstellung der Spann-und Abstützscheibe im geöffneten Zustand,

Fig. 5 eine Darstellung der Spann- und Abstützscheibe in Draufsicht im geschlossenen Zustand von der Primärseite aus,

Fig. 6 eine Rückansicht der Spann- und Abstützscheibe mit montiertem Schwenkantrieb,

Fig. 7 einen Schnitt A-A gemäß Fig. 6,

Fig. 8 einen Schnitt B-B gemäß Fig. 1 und

Fig.9 eine perspektivische Darstellung der Spann-und Abstützscheibe im gespannten (geschlossenen) Zustand.

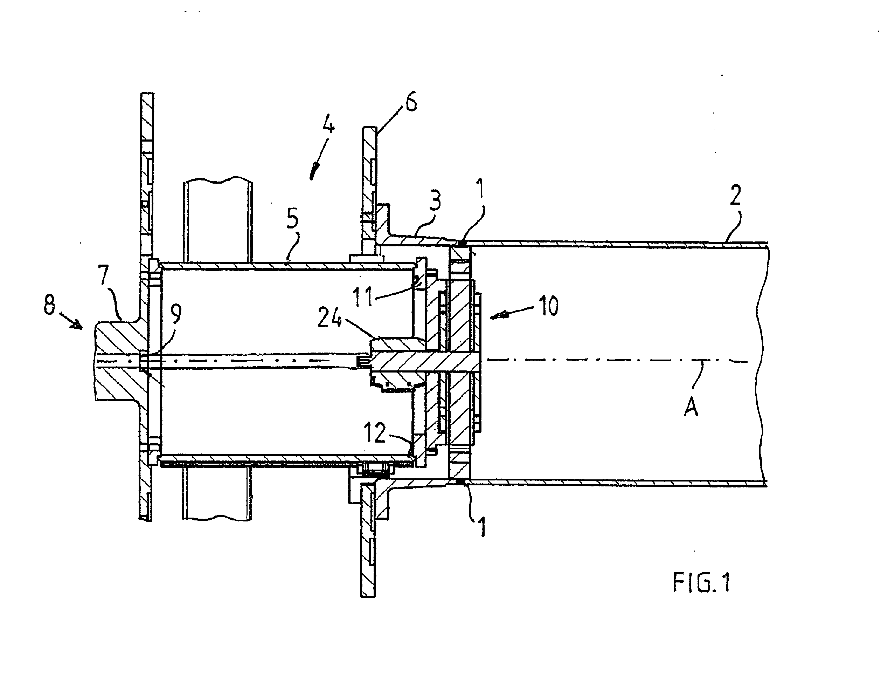

Die Fig. 1 zeigt den Stoßbereich zweier rotationssymmetrischer Hohlkörper, beispielsweise eines Rohres und eines Flansches, die an ihren Stirnenden einen Stumpfstoß 1 bilden und durch Reibrührschweißen verbunden werden sollen.
Die Flansch-Rohr-Anordnung 1 setzt sich in diesem Beispiel aus einem Aluminiumrohr 2 der Qualität EN-AW6083 und einem Flansch 3 der Gussqualität ALSi7Mg0.3 zusammen. Das Aluminiumrohr 2 und der Flansch 3 haben einen identischen Innendurchmesser. Die Wandstärke von Rohr und Flansch beträgt mm und die Länge des Rohres mm.

Der Flansch 3 ist an einer drehbaren Flanschaufnahme 4 festgelegt, an der eine Hülse 5 fixiert ist, an welche eine Planscheibe 6 lösbar befestigt ist. Die Hülse 5 ist einerends an der aus einer Hohlwelle 7 ausgeführten Antriebswelle 8 befestigt, so dass durch diese eine Versorgungsleitung 9 für den Antrieb des Schwenkantriebes 24 der Spann- und Abstützscheibe 10 geführt werden kann. Anderenends weist die Hülse 10 einen Befestigungsflansch 11 zur Befestigung der Spann- und Abstützscheibe 10 auf.
Die Planscheibe 4 ist gegenüber dem aufragenden Hülsenende 12 in solch einem Abstand zurückversetzt angeordnet, dass der an der Planscheibe 4 befestigte Flansch 3 mit seinem Rohrteil gegenüber dem Hülsenende 12 vorsteht, wodurch unter dem Stumpfstoßbereich 1 zwischen Flansch 3 und Rohr 2 ein ausreichender Platz zum Einbringen für die Spann- und Abstützscheibe 10 verbleibt.
Das Aluminiumrohr 2 wird an das Stirnende des Flansches 3 angesetzt und ist -wie zuvor beschrieben- an einer entsprechenden nicht dargestellten drehbar angetriebenen Aufnahme befestigt.

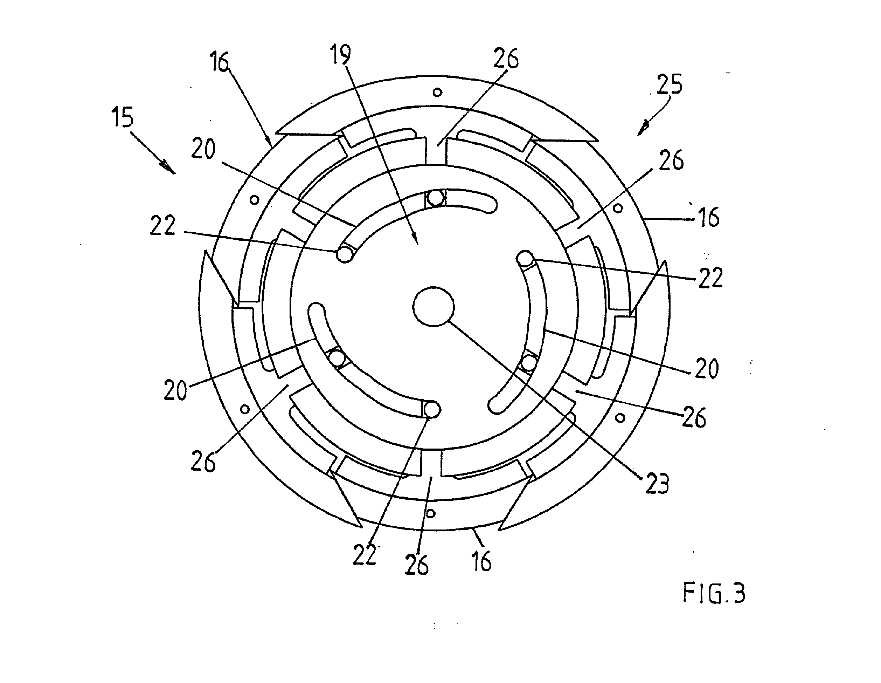

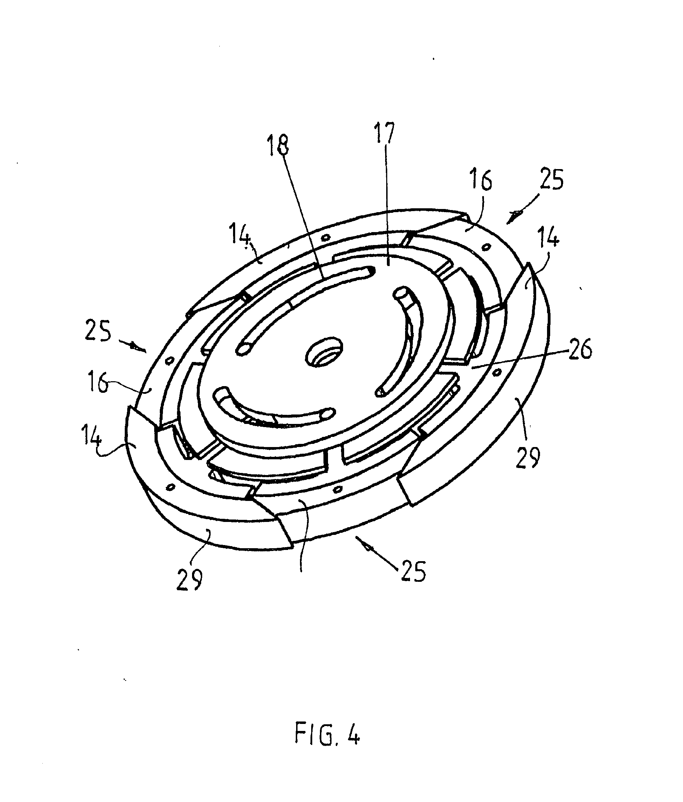

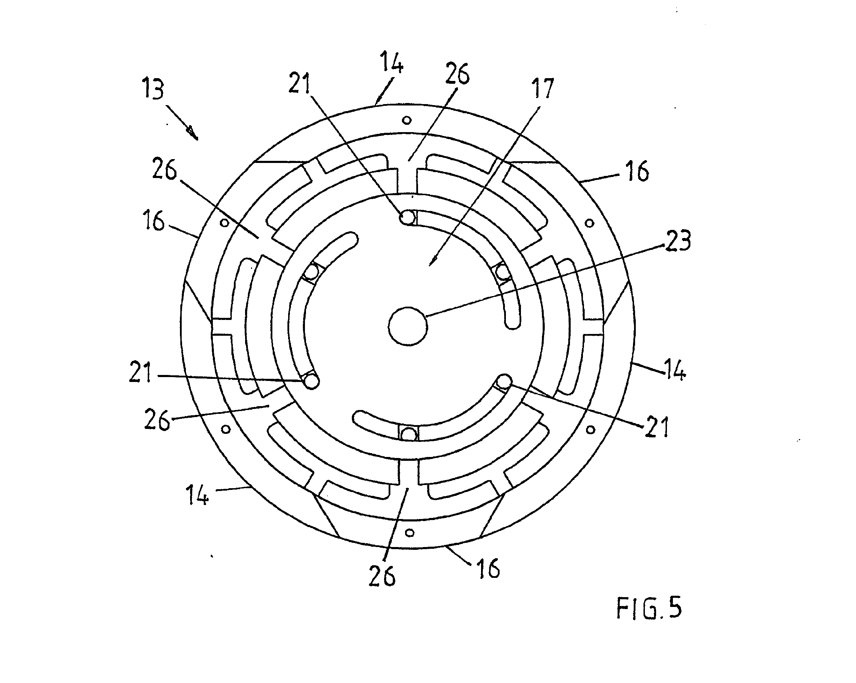

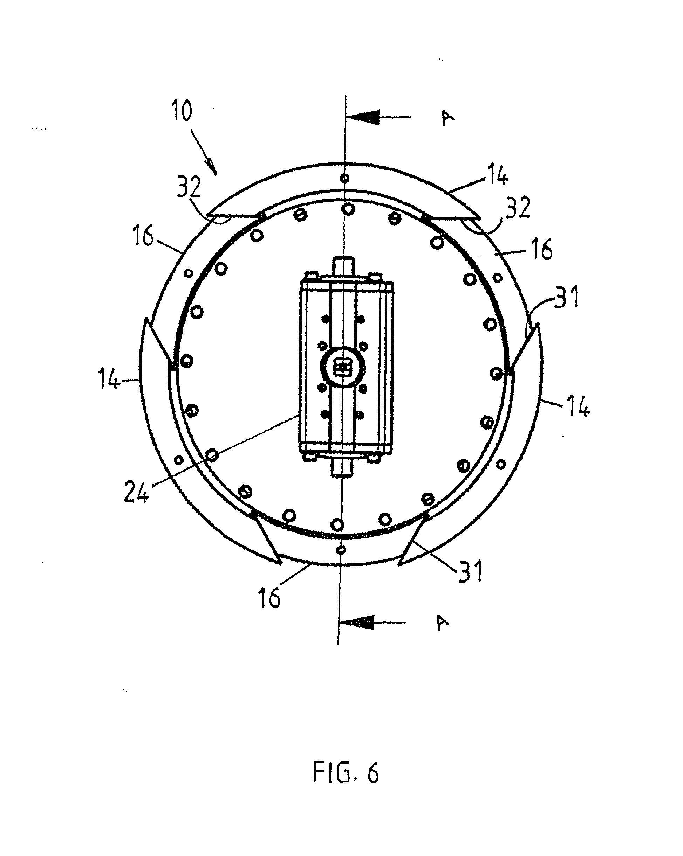

Die Fig. 3 bis 9 zeigen die pneumatische Spann- und Abstützscheibe 10, die sich aus einem Primärbackenkörper 13 mit einzelnen Primärbacken 14, einem Sekundärbackenkörper 15 mit einzelnen Sekundärbacken 16, einer Primärsteuerscheibe 17 mit darin eingearbeiteter Steuerkulisse 18, einer Sekundärsteuerscheibe 19 mit darin eingearbeiteter Steuerkulisse 20, Steuerbolzen 21 und 22, die in den Steuerkulissen 18 und 20 geführt und mit der jeweiligen Primär- und Sekundärbacken 14 bzw. 16 verbunden sind, einer mit den Steuerscheiben 19 und 21 fest verbundenen Steuerwelle 23 und einem Schwenkantrieb 24.

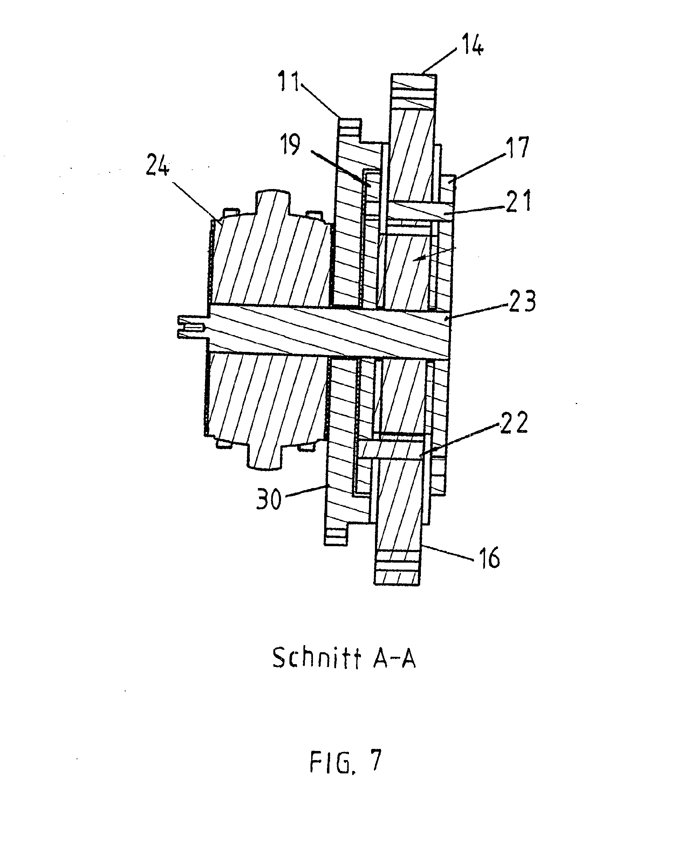

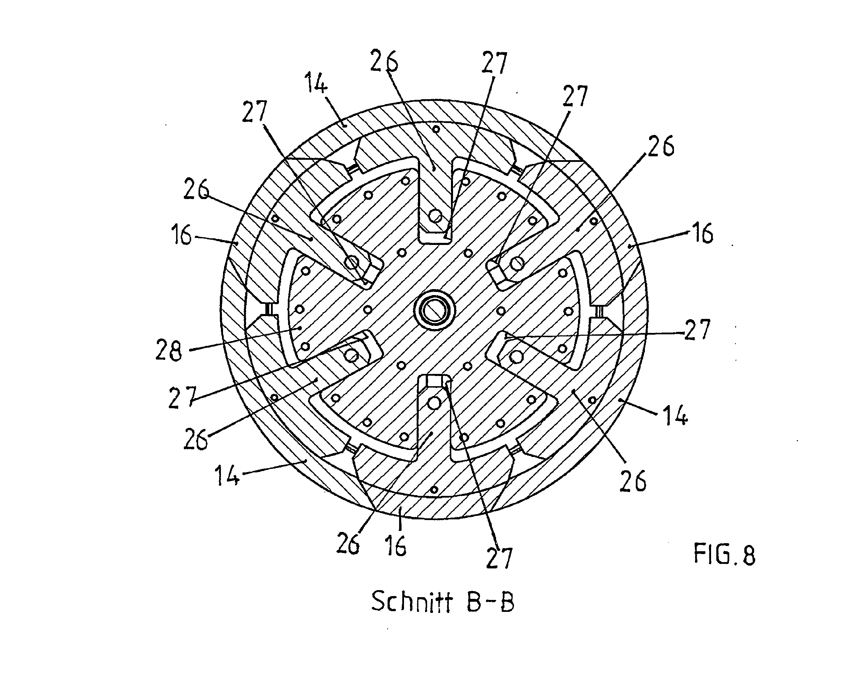

Die mindestens drei Primärbacken 14 sind auf Lücke 25 im Abstand voneinander kreissegmentförmig am Umfang der Spann- und Abstützscheibe 10 angeordnet und von einem Steg- und Halteelement 26 getragen, das radial in Richtung Hohlkörperachse A verlaufenden Ausnehmungen 27 linear verschiebbar einliegt. Jedes Steg- und Halteelement 26 besitzt einen senkrecht aufragenden Steuerbolzen 21 (siehe Fig. 7 und 8). Die Primärsteuerscheibe 17 besitzt für jede Primärbacke 14 eine Steuerkulisse 18 zum Führen der Steuerbolzen 21 der Primärbacken 14.

Mindestens drei Sekundärbacken 16 sind entlang des Umfangs der Spann- und Abstützscheibe 10 zueinander versetzt kreissegmentförmig so angeordnet, dass sie jeweils die Lücken 25 zwischen zwei Primärbacken 14 ausfüllen können. Jede Sekundärbacke 16 stützt sich ebenso wie die Primärbacke 14 auf ein Steg- und Haltelement 26 ab, an dem der senkrecht aufragend der Steuerbolzen 22 befestigt ist. Alle Steg- und Halteelemente 26 der Sekundärbacken 16 sind in den radial verlaufenden Ausnehmungen 27 des Trägerelementes 28 gleitverschieblich geführt. In der Sekundärsteuerscheibe 19 ist für jede Sekundärbacke 16 eine Steuerkulisse 20 eingebracht, in der der entsprechende Steuerbolzen 22 geführt wird (siehe Fig. 3, 7 und 8).

Die Steuerwelle 23 ist fest mit der Primärsteuerscheibe 17 und der Sekundärsteuerscheibe 19 verbunden, so dass bei einer vom Schwenkantrieb 14 veranlassten Schwenkbewegung die Stege 26 in den Ausnehmungen 27 im Zusammenspiel mit den ihren Steuerkulissen 18 und 20 geführten Steuerbolzen 21 und 22 die Schwenkbewegung in eine linear radial verlaufende Verschiebebewegung umgesetzt wird, wobei sich zunächst die Primärbacken 14 beim Spannen radial nach außen bewegen, sodann die Lücken zwischen den Primärbacken 14 durch die Sekundärbacken 16 ausgefüllt werden und beim Entspannen bzw. Lösen zuerst die Sekundärbacken 16 radial aus den Lücken zwischen den Primärbacken 14 nach innen eingefahren und dann die Primärbacken 14 entspannt werden. Der Verschiebevorgang der drei Primärbacken 14 und der drei Sekundärbacken 16 verläuft jeweils simultan, wobei beim Spannen die Sekundärbacken 16 gegenüber den Primärbacken 14 und beim Entspannen die Primärbacken 14 gegenüber den Sekundärbacken 16 in ihrer Verschiebebewegung nachfolgen.
Dies wird durch die Form und den Verlauf der Steuerkulissen 18 bzw. 20 erreicht, wobei die Steuerkulissen 18 der Primärsteuerscheibe 17 untereinander eine identische, jedoch von den Steuerkulissen 20 der Sekundärsteuerscheibe 19 unterschiedliche Steuerkurve aufweisen.

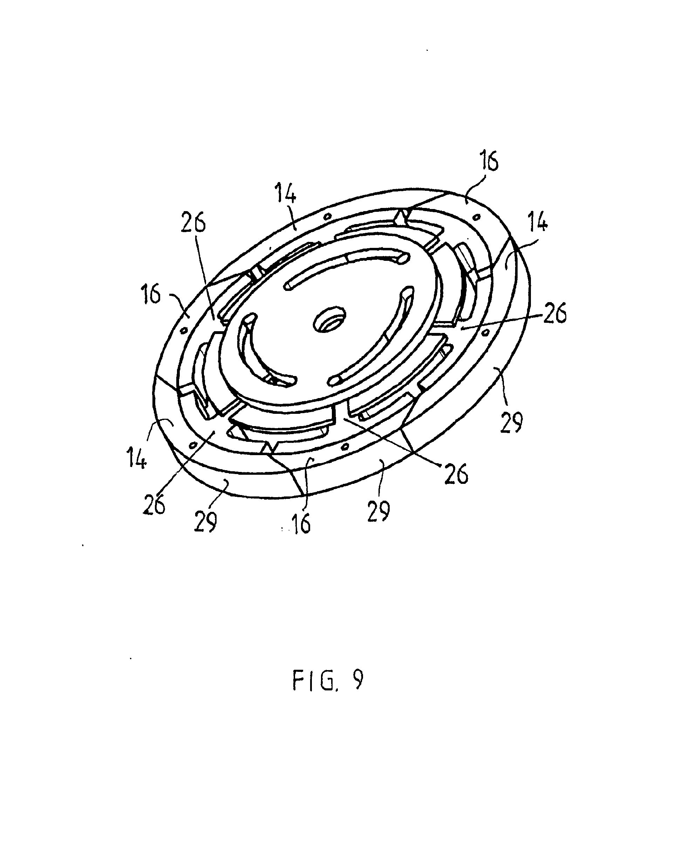

Die Spann- und Abstützscheibe 10 bildet im gespannten Zustand entlang ihres äußeren Umfangs einen vollkommen geschlossenen Stirnbereich 29, der beispielsweise eine Breite zwischen 10 mm bis 50 mm, vorzugsweise 30 mm besitzen kann (siehe Fig. 9). Dies wird durch Abschrägungen 31 und 32 an den Enden der Primär- und Sekundärbacken 14 bzw. 16 möglich, die aufeinander nach Lage und Winkel abgestimmt sind, wobei die Abschrägung 31 der Primärbacke 14 der Steuerwelle 23 zugewandt und die Abschrägung 32 der Sekundärbacke 16 der Steuerwelle 23 abgewandt ist.

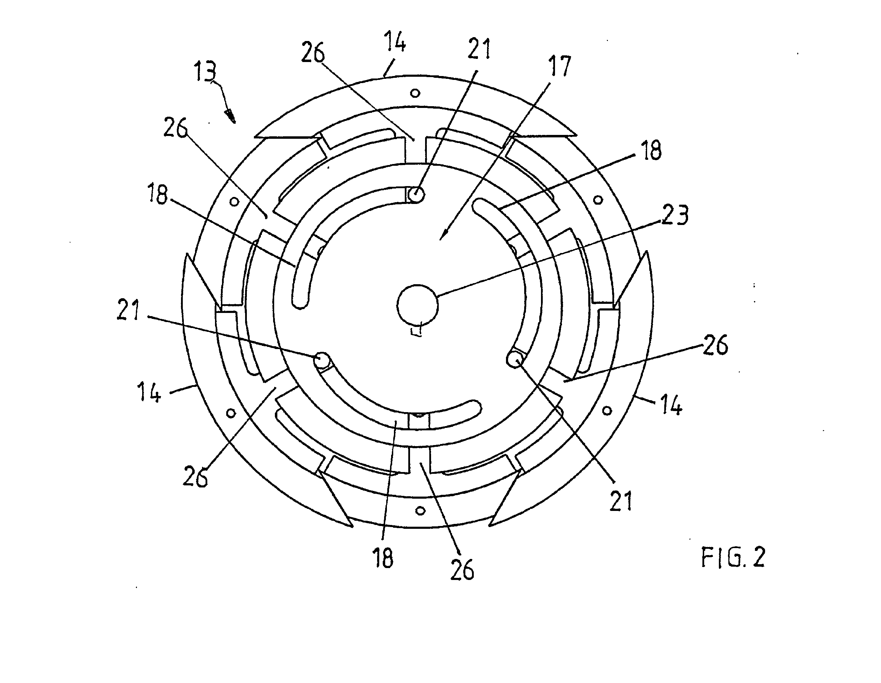

Die Spann- und Abstützscheibe 10 liegt mit ihrem Befestigungsflansch 30 am Befestigungsflansch 11 (siehe Fig. 2) der Hülse 10 exakt fest, stützt sich an diesem ab und nimmt in Bezug auf den Stumpfstoß 1 eine Funktion in dreierlei Hinsicht wahr, und zwar als Schweißbadsicherung zur Stabilisierung des erweichten Stoßbereiches in vertikaler und axialer Richtung, Widerlager für die vom Rührreibschweißwerkzeug aufgebrachten Druckkräfte und Zentriermittel zum Ausrichten der Längsachsen von Rohr 2 und Flansch 3.

### Bezugszeichenliste

- Stumpfstoß von Rohr und Flansch: 1
- Aluminiumrohr: 2
- Flansch: 3
- Flanschaufnahme: 4
- Hülse: 5
- Planscheibe: 6
- Hohlwelle: 7
- Antriebswelle: 8
- Versorgungsleitung: 9
- Spann- und Abstützscheibe: 10
- Befestigungsflansch an 5: 11
- Hülsenende: 12
- Primärbackenkörper: 13
- Primärbacken: 14
- Sekundärbackenkörper: 15
- Sekundärbacken: 16
- Primärsteuerscheibe: 17
- Steuerkulisse in 17: 18
- Sekundärsteuerscheibe: 19
- Steuerkulisse in 19: 20
- Steuerbolzen: 21, 22
- Steuerwelle: 23
- Schwenkantrieb: 24
- Lücke zwischen 14: 25
- Steg- und Halteelement von 14, 16: 26
- Ausnehmungen in 28: 27
- Trägerelement: 28
- Stirnbereich von 10: 29
- Befestigungsflansch: 30
- Abschrägung: 31, 32
- Hohlkörperachse: A

## Patentansprüche

1. Vorrichtung zum Zentrieren, Abstützen und zur Schweißbadsicherung beim Verbinden, insbesondere Rührreibschweißen oder Schmelzschweißen, von Stumpfstößen rotationsymmetrischer Hohlkörper, beispielsweise Rohre, Flansche o. dgl., mit einem sich an den Innendurchmesser des Hohlkörpers formschlüssig anpassbaren, mittig auf der Hohlkörperachse (A) angeordneten Spannkörper, **dadurch gekennzeichnet, dass** der Spannkörper als Schweißbadsicherung in Form einer Spann- und Abstützscheibe (10) ausgebildet ist, die in kreissegmentförmige Primär- und Sekundärbacken (14,16) mit jeweils daran radial in Richtung Hohlkörperachse (A) angebrachten Steg- und Haltelementen (26) aufgeteilt ist, von denen jedes Steg- und Halteelement (26) der Primär- und Sekundärbacke (14,16) in einer Aussparung (27) eines Trägerelementes (28) geführt und einen Steuerbolzen (21,22) aufweist, der jeweils in eine separate Steuerkulisse (18,20) einer jeweils den Primärbacken (14) und Sekundärbacken (16) gesondert zugeordneten Primärsteuer- und Sekundärsteuerscheibe (17,19) zum radialen Führen und Verstellen der Steuerbolzen (21,22) in die jeweilige Steuerkulisse (18,20) eingreift, wobei die Primärsteuerscheibe (17) und Sekundärsteuerscheibe (19) mit einer Steuerwelle (23) verbunden ist, die zum Hin- und Herschwenken der Primärsteuerscheibe (17) und der Sekundärsteuerscheine (19) zwischen einem Spann- und Entspannzustand der Primär- und Sekundärbacken (14,16) mit einem Schwenkantrieb (24) in Verbindung steht.

2. Vorrichtung nach Anspruch 1, **dadurch gekennzeichnet, dass** die Spann- und Abstützscheibe (10) umfasst:
a) einen Primärbackenkörper (13) aus mindestens drei Primarbacken (14), die unter Bildung von Lücken (25) kreissegmentförmig am Umfang der Scheibe (10) angeordnet sind und an dessen Steg- und Halteelement (26) der Steuerbolzen (21) senkrecht aufragend befestigt ist;
b) die Primärsteuerscheibe (17), in der für jede Primärbacke (14) die Steuerkulisse (18) zum Führen der Steuerbolzen (21) der Primärbacken (14) vorgesehen ist;
c) einen Sekundärbackenkörper (15) aus mindestens drei kreissegmentförmigen Sekundärbacken (16), an deren Steg- und Halteelemente (26) der Steuerbolzen (22) senkrecht aufragend befestigt ist, wobei die Sekundärbacken (16) zueinander versetzt entlang des Umfangs so angeordnet sind, dass sie die Lücken (25) zwischen jeweils zwei Primärbacken (14) schließen können;
d) das Trägerelement (28) mit radial angeordneten Aussparungen (27) zum Verschieben der Steg- und Halteelemente (26) in radialer Richtung;
e) die Sekundärsteuerscheibe (19), in der für jede Sekundärbacke (16) die Steuerkulisse (20) zum Führen der Steuerbolzen (22) der Sekundärbacken (16) vorgesehen ist;
f) die Steuerwelle (23), die fest mit der Primärsteuerscheibe (17) und der Sekundärsteuerscheibe (16) verbunden ist und
g) einen pneumatischen oder hydraulischen oder elektrischen Schwenkantrieb (24), der die Steuerwelle (23) bewegt, um die Steuerbolzen (21,22) in ihren Steuerkulissen (18,20) zu führen und die Primärbacken (14) und Sekundärbacken (16) radial zu spannen oder zu entspannen.

3. Vorrichtung nach Anspruch 1, **dadurch gekennzeichnet, dass** beim Spannvorgang die Spann- und Abstützscheibe (10) in das Innere des Stoßbereiches der zu verbindenden Hohlkörper spannend eingreift und in einem ersten Spannzustand etwa 65 bis 70% der Innenumfangs im Stoßbereich mittels durch Lücken (25) der voneinander beabstandeten Primärbacken (14) und in einem zweiten Spannzustand der gesamte Innenumfang durch ein radiales Ausfahren der Sekundärbacken (16) in die Lücken (25) zwischen den Primärbacken (14) in Richtung Innenwand im Stoßbereich beaufschlagt wird, so dass der Stirnbereich (30) der Spann- und Abstützscheibe (10) eine geschlossene Fläche für die Schweißbadsicherung, das Widerlager für die Druckkräfte beim Verbinden und zum Spannen gegen die Innenwand bildet, und dass zum Lösen der Spann- und Abstützscheibe (10) die Sekundärbacken (16) aus dem Bereich zwischen den Primärbacken (14) radial entgegengesetzt zur Innenwand im Stoßbereich eingefahren werden.

4. Vorrichtung nach Anspruch 1, **dadurch gekennzeichnet, dass** die Steuerkulissen (18,20) in den Steuerscheiben (17,19) radial so angeordnet sind, dass beim Spannen die Primärbacken (14) und Sekundärbacken (16) durch den Schwenkantrieb (24) simultan bewegt werden, jedoch die Sekundärbacken (16) gegenüber den Primärbacken (14) und beim Entspannen die Primärbacken (14) gegenüber den Sekundärbacken (16) in ihrer Verschiebebewegung nachfolgen.

5. Vorrichtung nach Anspruch 1 oder 2, **dadurch gekennzeichnet, dass** die Primärbacken (14) und Sekundärbacken (16) jeweils an ihren einander zugewandten Ende eine Abschrägung (31,32) aufweisen, die aufeinander nach Lage und Winkel abgestimmt sind, wobei die Abschrägung (31) der Primärbacken (14) der Steuerwelle (23) zugewandt und die Abschrägung (32) der Sekundärbacken (16) der Steuerwelle (23) abgewandt ist.
